# EUROPÄISCHE PATENTSCHRIFT

(11) **EP 3 189 500 B1**
(45) Veröffentlichungstag und Bekanntmachung des Hinweises auf die Patenterteilung: **22.04.2020**
(21) Anmeldenummer: 15771866.9
(22) Anmeldetag: 04.09.2015
(51) Int. Cl.: G06T 11/00, G06T 19/00, G06T 15/50

(54) **AUGMENTED REALITY-GESTÜTZTES BELEUCHTUNGSSYSTEM UND -VERFAHREN**
AUGMENTED REALITY-BASED LIGHTING SYSTEM AND METHOD
SYSTÈME D'ÉCLAIRAGE ASSISTÉ PAR RÉALITÉ AUGMENTÉE ET PROCÉDÉ ASSOCIÉ

(30) Priorität: 04.09.2014 DE 102014217675
(43) Veröffentlichungstag der Anmeldung: 12.07.2017
(73) Patentinhaber: Zumtobel Lighting GmbH, 6850 Dornbirn (AT)
(72) Erfinder: MAYR, Gregor, 6974 Gaissau (AT)
(74) Vertreter: Kiwit, Benedikt
(86) Internationale Anmeldenummer: PCT/EP2015/070252
(87) Internationale Veröffentlichungsnummer: WO 2016/034711

(56) Entgegenhaltungen:
- US-A1- 2002 010 734
- US-A1- 2012 231 424
- Estiluz: "Estiluz augmented reality lighting app (English)", , 1. Mai 2013 (2013-05-01), XP054976253, Gefunden im Internet: URL:https://www.youtube.com/watch?v=nHGMOZ nB1Ow&feature=player_embedded [gefunden am 2015-12-11]
- Artemide: "Jetzt verfügbar: die neue Artemide Augmented Reality App - Artemide", , 8. April 2014 (2014-04-08), XP055235968, Gefunden im Internet: URL:http://artemide.de/blog/jetzt-verfuegb ar-die-neue-artemide-augmented-reality-app / [gefunden am 2015-12-14] & Artemide: "Artemide AugmentedReality Video Guide", , 21. Oktober 2014 (2014-10-21), XP054976257, Gefunden im Internet: URL:https://www.youtube.com/watch?v=UQ3_R0 UwVJQ [gefunden am 2015-12-11]
- KATRIEN JACOBS ET AL: "Classification of Illumination Methods for Mixed Reality", COMPUTER GRAPHICS FORUM, Bd. 25, Nr. 1, 1. März 2006 (2006-03-01), Seiten 29-51, XP055150689, ISSN: 0167-7055, DOI: 10.1111/j.1467-8659.2006.00816.x

## Beschreibung

Die Erfindung betrifft ein Beleuchtungssystem und ein Verfahren zur Interaktion mit einem Beleuchtungssystem, welche Augmented Reality nutzen.

Zur Visualisierung eines noch nicht aufgebauten Beleuchtungssystems werden herkömmlicherweise Zeichnungen oder 3D-Modelle, welche von einem Beleuchtungsplaner erstellt werden, genutzt. Hierzu ist es jedoch notwendig, eine genaue Vermessung der entsprechenden Räumlichkeiten durchzuführen und in einem zeitaufwendigen Prozess, ein 3D-Modell des Raums mit aufgebautem Beleuchtungssystem zu erstellen. Nachteilhaft hieran ist, dass zwischen dem Entstehen einer Beleuchtungsidee und ihrer Visualisierung eine nennenswerte Zeit vergeht und darüber hinaus ein nennenswerter Bearbeitungsaufwand nötig ist.

Die Patentanmeldung GB 2494697 A zeigt ein System und Verfahren, welche Augmented Reality nutzen, um Mobiliar virtuell in einem von einer Kamera aufgenommen Raum zu platzieren. Gezeigt ist dort jedoch lediglich die Positionierung eines Sofas. Insbesondere wird dort keine Anordnung von mit der Raumbeleuchtung interagierenden Objekten, wie z.B. Leuchten gezeigt.

US 2O12/231424 A1 zeigt ein System und Verfahren für Echtzeit-Videoanalysen, wie beispielsweise Augmented Reality, um Benutzer eines mobilen Geräts bei der Inneneinrichtung zu unterstützen. Hierzu wird der einzurichtende Raum mittels einer Kameraeinheit in Echtzeit erfasst und es werden Informationen zu Merkmalen des einzurichtenden Raumes ermittelt. Anschließend wird dem Benutzer auf dem mobilen Gerät eine virtuelle Repräsentation des Raumes und vorhandener sowie möglicher neuer Gestaltungselemente angezeigt, wobei die Gestaltungselemente in dem virtuellen Raum beliebig anordenbar sind.

US 2002/010734 A1 zeigt ein Augmented Reality System, welches neben dem Design von Innenräumen auch zur Durchführung von Wartungsarbeiten ausgebildet ist. Das System weist eine Kameraeinheit und eine Anzeigeeinheit auf. In dem System wird eine automatische Erkennung von mit der Kameraeinheit erfassten Elementen in einem Raum durchgeführt und darauf basierend werden Informationen zu diesen Elementen virtuell angezeigt.

Der Erfindung liegt die Aufgabe zu Grunde, ein Beleuchtungssystem und ein Verfahren zur Interaktion mit einem Beleuchtungssystem zu schaffen, welche mit geringem Zeitbedarf und großer Flexibilität eine Planung des Beleuchtungssystems ermöglichen.

Die Aufgabe wird erfindungsgemäß für die Vorrichtung durch die Merkmale des unabhängigen Anspruchs 1 und für das Verfahren durch die Merkmale des unabhängigen Anspruchs 8 gelöst. Vorteilhafte Weiterbildungen sind Gegenstand der hierauf rückbezogenen Unteransprüche.

Ein erfindungsgemäßes Beleuchtungssystem verfügt dabei über zumindest eine tatsächliche Leuchte, ein.Steuergerät zur Steuerung der tatsächlichen Leuchte und ein Bediengerät, wobei das Steuergerät mit dem Bediengerät zur Übertragung einer Bedienung des Bediengerätes verbunden ist. Das Bediengerät beinhaltet eine Kameraeinheit zur Erfassung der Umgebung des Bediengeräts mit der zumindest einen tatsächlichen Leuchte als Bewegtbild. Die Kameraeinheit ist dabei ausgebildet, um die zumindest eine tatsächliche Leuchte auf dem erfassten Bewegtbild zu erfassen und zu erkennen. Darüber hinaus beinhaltet das Bediengerät eine Anzeigeeinrichtung, auf welcher das Bewegtbild in Echtzeit angezeigt wird. Weiterhin umfasst es eine Positionserfassungseinrichtung, welche Positionsinformationen des Bediengeräts ermittelt. Die Positionsinformationen beinhalten dabei bevorzugt eine Position und eine Orientierung des Bediengeräts. Darüber hinaus umfasst das Bediengerät eine Anzeigeüberlagerungseinrichtung, welche basierend auf Umgebungsinformationen und den ermittelten Positionsinformationen visuelle Beleuchtungsinformationen perspektivisch weitgehend korrekt in das angezeigte Bewegtbild einfügt und mittels der Anzeigeeinrichtung anzeigt. So kann ohne Zeitverzug und ohne nennenswerte Bearbeitungszeit eine Beleuchtungsidee visualisiert werden.

Die Beleuchtungsinformationen sind dabei zumindest ein Bedienelement (35) zur Bedienung und Steuerung der tatsächlichen Leuchte (30, 31, 51, 52, 53). So kann das Beleuchtungssystem sehr flexibel geplant und gesteuert werden.

Die Beleuchtungsinformationen können dabei ferner zumindest eine virtuelle Leuchte (3), eine Beleuchtungs- und/oder Abstrahlcharakteristik oder andere Effekte einer Beleuchtung und/oder eine Anzeige eines Energieverbrauchs (36) einer virtuellen Leuchte (3) oder einer erfassten tatsächlichen Leuchte (30, 31, 51, 52, 53), Zusatzinformationen (34, 36, 41) der virtuellen und/oder tatsächlichen Leuchte (3, 30, 31, 51, 52, 53), ein Bedienelement (35) zur Bedienung und Steuerung der virtuellen Leuchte (3, 30, 31, 51, 52, 53), oder Informationen bezüglich einer defekten virtuellen und/oder tatsächlichen Leuchte (3, 30, 31, 51, 52, 53) sein. So kann das Beleuchtungssystem sehr flexibel geplant und gesteuert werden.

Bevorzugt beinhalten die Umgebungsinformationen dabei eine Raumgeometrie eines Raumes, in welchem sich das Bediengerät befindet. Zusätzlich oder alternativ ist die Anzeigeüberlagerungseinrichtung ausgebildet, um die Umgebungsinformationen aus einer Datenbank auszulesen oder zu empfangen oder anhand des Bewegtbildes und/oder anhand von Sensorinformationen einer Sensoreinrichtung zu ermitteln. So kann die in das Bewegtbild eingefügte Leuchte besonders genau an die Geometrie des Raumes angepasst werden. Ein sehr realistisches Abbild wird so erzielt.

Vorzugsweise ist die Anzeigeüberlagerungseinrichtung ausgebildet, um eine die Beleuchtung der Umgebung des Bediengeräts, vorzugsweise durch die zumindest eine tatsächliche und/oder durch zumindest eine virtuelle Leuchte, als Beleuchtungsinformation zu simulieren und perspektivisch weitgehend korrekt in das angezeigte Bewegtbild einzufügen. Dabei können als Beleuchtungsinformation eine Helligkeit und/oder Lichtfarbe und/oder Abstrahlcharakteristik der Beleuchtung durch einen Nutzer eingestellt werden. So können die Effekte der eingefügten Leuchte auf die Beleuchtungssituation des Raumes vor einer Montage der Leuchte abgeschätzt werden. Zeit- und Ressourcen-aufwändige Umbauarbeiten nach einer fehlerhaften Entscheidung im Entwurfsprozess können so vermieden werden.

Wie oben ausgeführt, umfasst das Beleuchtungssystem zumindest eine tatsächliche Leuchte. Die Kameraeinheit ist dabei ausgebildet, um die zumindest eine tatsächliche Leuchte auf dem erfassten Bewegtbild zu erfassen und zu erkennen. So ist es möglich, mit der erfassten Leuchte mittels des Bediengeräts zu interagieren. Eine sehr einfache Bedienung des Beleuchtungssystems kann so erreicht werden.

Bevorzugt ist die Anzeigeüberlagerungseinrichtung ausgebildet, um Zusatzinformationen hinsichtlich zumindest einer virtuellen Leuchte und/oder der zumindest einen erfassten tatsächlichen Leuchte als Beleuchtungsinformation in einem Bereich der zumindest einen tatsächlichen und/oder der virtuellen Leuchte in das Bewegtbild einzufügen. Die Zusatzinformationen können dabei Montagehinweise und/oder technische Daten und/oder Bedienungsinformationen sein. So kann eine sehr genaue und fundierte Bedienung des Beleuchtungssystems erfolgen.

Gemäß der Erfindung verfügt das Beleuchtungssystem weiterhin über ein Steuergerät. Die Anzeigeüberlagerungseinrichtung ist in diesem Fall bevorzugt ausgebildet, um das zumindest eine der zumindest einen tatsächlichen und vorzugsweise einer virtuellen Leuchte zugeordnete Bedienelement als Beleuchtungsinformation in einem Bereich der zumindest einen tatsächlichen Leuchte in das Bewegtbild einzufügen. Das Bediengerät ist dabei bevorzugt ausgebildet, um eine Bedienung des angezeigten Bedienelements zu erfassen und an das Steuergerät zu übertragen. Das Steuergerät ist in diesem Fall bevorzugt dazu ausgebildet, um die zumindest eine tatsächliche und vorzugsweise eine virtuelle Leuchte des Beleuchtungssystems basierend auf der von dem Bediengerät übertragenen Bedienung zu steuern. Dabei kann die Bedienung ein Schalten und/oder Dimmen und/oder ein Verändern einer Farbtemperatur und/oder ein Verändern einer Beleuchtungsfarbe der virtuellen und/oder der tatsächlichen Leuchte umfassen. Auch eine Eingabe komplexer Steuerungsabläufe wie z.B. ein Dimmverlauf über das Bediengerät ist denkbar. So kann besonders einfach mit dem Beleuchtungssystem interagiert werden.

Bevorzugt ist die Anzeigeüberlagerungseinrichtung weiterhin ausgebildet, um nach Erfassung der Bedienung des angezeigten Bedienelements, Effekte der Bedienung als Beleuchtungsinformation auf eine gegenwärtige Beleuchtung bzw. virtuelle Leuchte eines von dem Bewegtbild dargestellten Bereichs zu simulieren und perspektivisch weitgehend korrekt in das angezeigte Bewegtbild einzufügen. Zusätzlich oder alternativ ist die Anzeigeüberlagerungseinrichtung in diesem Fall dazu ausgebildet, einen Energieverbrauch der tatsächlichen und/oder einer virtuellen Leuchte nach Durchführung der Bedienung abzuschätzen und als Beleuchtungsinformation in einem Bereich der zumindest einen tatsächlichen oder der virtuellen Leuchte in das Bewegtbild einzufügen. Das Bediengerät ist dabei ausgebildet, um die Bedienung erst nach einer erneuten Bestätigung der Bedienung an das Steuergerät zu übertragen. So ist es Nutzern möglich, die Konsequenzen der eingegebenen Bedienung vor einer tatsächlichen Steuerung der Leuchten des Beleuchtungssystems zu beurteilen.

Vorzugsweise verfügt die Kameraeinheit über eine Fehlerermittlungseinrichtung, welche ausgebildet ist, um anhand des Bewegtbildes, Defekte in der zumindest einen tatsächlichen und/oder in einer virtuellen Leuchte des Beleuchtungssystems und/oder Defekte in Komponenten in der zumindest einen tatsächlichen und/oder einer virtuellen Leuchte des Beleuchtungssystems zu erkennen. Die Anzeigeüberlagerungseinrichtung ist dann ausgebildet, um in einem Bereich der defekten virtuellen und/oder tatsächlichen Leuchte und/oder der defekten Komponente der tatsächlichen und/oder der virtuellen Leuchte Informationen zu dem Defekt und/oder eine Liste für eine Reparatur des Defekts benötigte Ersatzteile und/oder eine Anleitung zur Durchführung einer Reparatur des Defekts als Beleuchtungsinformation in das angezeigte Bewegtbild einzufügen. So kann ein Nutzer sinnvoll in der Erkennung und Behebung des Defekts unterstützt werden.

Vorzugsweise ist die Fehlerermittlungseinrichtung ausgebildet, um die Defekte anhand von eingeschränkter Lichtstärke und/oder Flackern und/oder fehlerhafter Lichtfarbe einer virtuellen und/oder der tatsächlichen Leuchte und/oder anhand von Blinkmustern einer virtuellen und/oder der tatsächlichen Leuchte und/oder anhand von Blinkmustern von in eine virtuelle und/oder in die tatsächliche Leuchte integrierten Status-LEDs zu erkennen. So ist eine automatische Detektion der Defekte gewährleistet. Eine besonders einfache Bedienung und Reparatur durch den Nutzer ist so möglich.

Ein erfindungsgemäßes Verfahren zur Interaktion mit einem Beleuchtungssystem, welches ein Bediengerät, zumindest eine tatsächliche Leuchte und ein mit dem Bediengerät zur Übertragung einer Bedienung des Bediengerätes verbundenes Steuergerät zur Steuerung der tatsächlichen Leuchte umfasst, beinhaltet die folgenden Schritte: Erfassen einer Umgebung des Bediengeräts mit der zumindest einen tatsächlichen Leuchte als Bewegtbildes, Anzeigen des Bewegtbildes in Echtzeit mittels des Bediengeräts, Ermitteln von Positionsinformationen des Bediengeräts und perspektivisch weitgehend korrektes Einfügen visueller Beleuchtungsinformationen in das angezeigte Bewegtbild basierend auf Umgebungsinformationen, bevorzugt Bewegungsinformationen, und den Positionsinformationen. Dabei wird die zumindest eine tatsächliche Leuchte auf dem erfassten Bewegtbild erfasst und erkannt. Ferner sind die Beleuchtungsinformationen zumindest ein Bedienelement zur Bedienung und Steuerung der tatsächlichen Leuchte. So ist eine besonders einfache Planung des Beleuchtungssystems gewährleistet.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein erstes Ausführungsbeispiel des erfindungsgemäßen Beleuchtungssystems in einer dreidimensionalen Ansicht;
- Fig. 2: ein zweites Ausführungsbeispiel des erfindungsgemäßen Beleuchtungssystems in einem Blockschaltbild;
- Fig. 3: ein drittes Ausführungsbeispiel des erfindungsgemäßen Beleuchtungssystems in einer dreidimensionalen Ansicht;
- Fig. 4: ein viertes Ausführungsbeispiel des erfindungsgemäßen Beleuchtungssystems in einer dreidimensionalen Ansicht;
- Fig. 5: ein fünftes Ausführungsbeispiel des erfindungsgemäßen Beleuchtungssystems in einem Blockschaltbild;
- Fig. 6: ein sechstes Ausführungsbeispiel des erfindungsgemäßen Beleuchtungssystems in einem Blockschaltbild;
- Fig. 7: ein Detail eines Bediengeräts eines siebtem Ausführungsbeispiels des erfindungsgemäßen Beleuchtungssystems in einem Blockschaltbild;
- Fig. 8: ein erstes Ausführungsbeispiel des erfindungsgemäßen Verfahrens in einem Flussdiagramm;
- Fig. 9: ein zweites Ausführungsbeispiel des erfindungsgemäßen Verfahrens in einem Flussdiagramm;
- Fig. 10: ein drittes Ausführungsbeispiel des erfindungsgemäßen Verfahrens in einem Flussdiagramm, und
- Fig. 11: ein viertes Ausführungsbeispiel des erfindungsgemäßen Verfahrens in einem Flussdiagramm.

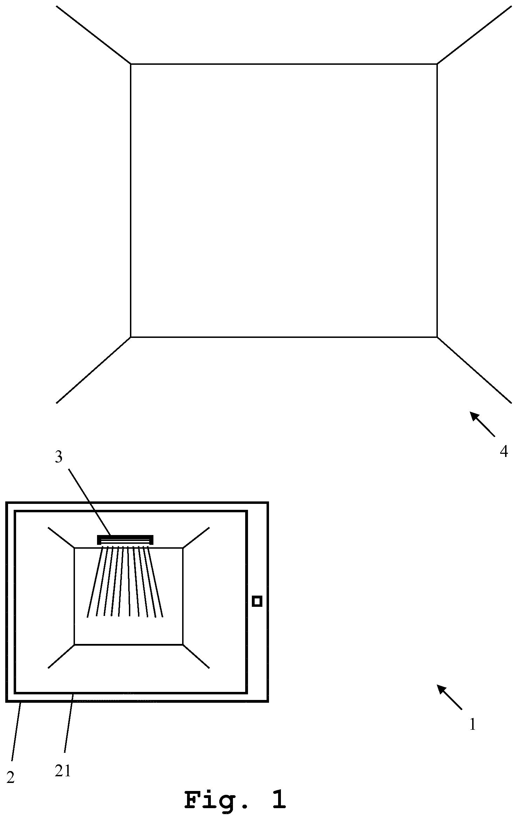

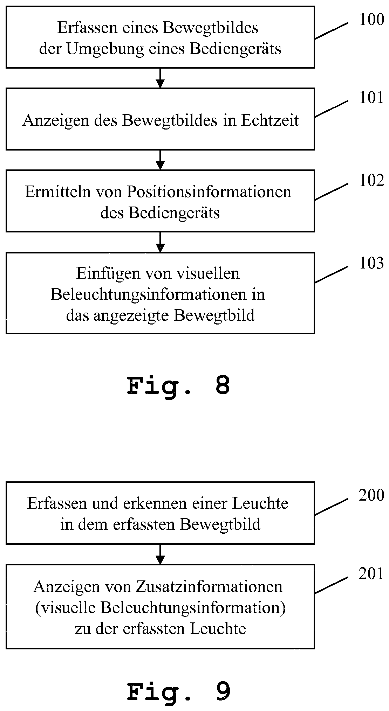

Zunächst wird anhand der Fig. 1 - 7 auf den Aufbau und die Funktionsweise unterschiedlicher Ausführungsbeispiele des erfindungsgemäßen Beleuchtungssystems eingegangen. Anschließend wird anhand von Fig. 8 - 11 auf die detaillierte Funktionsweise verschiedener Ausführungsbeispiele des erfindungsgemäßen Verfahrens hingewiesen. Identische Elemente wurden in ähnlichen Abbildungen z.T. nicht wiederholt dargestellt und beschrieben.

In Fig. 1 ist ein erstes Ausführungsbeispiel des erfindungsgemäßen Beleuchtungssystems 1 dargestellt. Das Beleuchtungssystem 1 beinhaltet hier lediglich ein Bediengerät, welches eine Anzeigeeinrichtung 21 aufweist. Bei dem Bediengerät kann es sich beispielsweise um einen Tablet-PC oder ein Mobiltelefon handeln. Darüber hinaus weist das Bediengerät 2 eine hier nicht sichtbare, auf der Rückseite des Bediengeräts 2 angeordnete Kameraeinheit auf. Das Bediengerät 2 ist dabei mit der Kameraeinheit auf einen Raum 4 gerichtet, in welchen gegenwärtig keine Leuchte montiert ist. Diese Situation tritt beispielsweise bei einer Rohbaubesichtigung auf. Ein Planer möchte sich unter Nutzung des erfindungsgemäßen Beleuchtungssystems einen Eindruck möglicher Leuchten in dem Raum 4 verschaffen.

Das von der Kameraeinheit aufgenommene Bewegtbild des Raums 4 wird auf der Anzeigeeinrichtung 21 des Bediengeräts 2 dargestellt. Zusätzlich blendet das Bediengerät 2 eine virtuelle Leuchte 3 als visuelle Beleuchtungsinformation an eine von einem Nutzer festlegbare Stelle ein. Dabei wird die Leuchte 3 perspektivisch korrekt an einer festgelegten Position des Raums 4 in das von der Anzeigeeinrichtung 21 dargestellte Bewegtbild eingefügt. So können unterschiedliche Leuchten oder auch mehrere Leuchten in Kombination eingeblendet werden. Dem Nutzer ist es somit möglich, vor der Montage von Leuchten, einen Eindruck davon zu gewinnen, wie der Raum 4 bei montierten Leuchten wirkt. Darüber hinaus ist auch eine Simulation einer von den eingeblendeten Leuchten 3 erzeugten Beleuchtungssituation möglich. Auch eine Simulation eines Dimmverlaufs, unterschiedlicher Lichtfarben, unterschiedlicher Helligkeiten, etc. ist möglich. Sämtliche dieser Informationen können als visuelle Beleuchtungsinformationen dargestellt werden.

Um die Leuchte 3 perspektivisch korrekt in dem Bewegtbild anordnen zu können, nutzt das Bediengerät 2 dabei Positionsinformationen des Bediengeräts, welche eine hier nicht dargestellte Positionserfassungseinrichtung ermittelt. Darüber hinaus nutzt das Bediengerät 2 Umgebungsinformationen, welche beispielsweise eine Raumgeometrie des Raums 4 beinhalten. Die Umgebungsinformationen kann das Bediengerät 2 dabei entweder selbst unter Zuhilfenahme der Kameraeinheit oder zusätzlicher Sensoren ermitteln oder aus einer Datenbank auslesen oder über eine Kommunikationseinrichtung empfangen.

Zur Auswahl einer in dem Raum zu simulierenden Leuchte kann dabei auf eine von dem Bediengerät auf der Anzeigeeinrichtung 21 dargestellte Liste von Leuchten optional inklusive Abbildungen zurückgegriffen werden. Alternativ können mittels der Kameraeinheit Strichcodes oder QR-Codes von vorhandenen Leuchten oder in einem Katalog gescannt werde, welche anschließend angezeigt werden. Auch eine Nutzung eines RFID-Lesers zur Erfassung der darzustellenden Leuchten ist denkbar, wenn Leuchten über RFID-Tags verfügen.

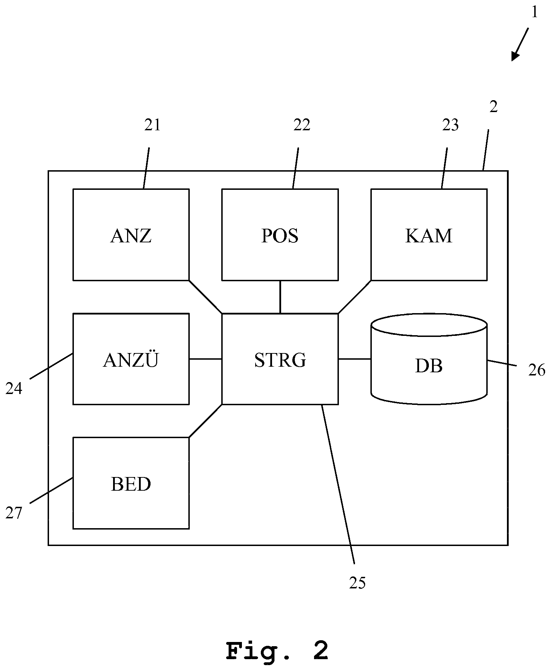

In Fig. 2 ist ein zweites Ausführungsbeispiel des erfindungsgemäßen Beleuchtungssystems 1 in einem Blockschaltbild dargestellt. Hier ist lediglich der innere Aufbau des Bediengeräts 2 gezeigt. Das Bediengerät 2 umfasst eine Anzeigeeinrichtung 21, eine Positionserfassungseinrichtung 22, eine Kameraeinheit 23, eine Anzeigeüberlagerungseinrichtung 24, eine Steuereinrichtung 25, eine Datenbank 26 und eine Bedieneinrichtung 27.

Die Anzeigeeinrichtung 21 stellt dabei, wie zuvor beschrieben, das von der Kameraeinheit 23 aufgenommene Bewegtbild dar. Die Positionserfassungseinrichtung 22 ermittelt die Positionsinformationen des Bediengeräts. Die Anzeigeüberlagerungseinrichtung 24 erzeugt sämtliche dem von der Kameraeinheit 23 aufgenommenen Bewegtbild zu überlagernden Informationen bzw. Anzeigen. In der Datenbank 26 sind optional Umgebungsinformationen und Informationen hinsichtlich der von der Anzeigeüberlagerungseinrichtung 24 darzustellenden visuellen Beleuchtungsinformationen, Anzeigen und Leuchten gespeichert. Diese werden bei Bedarf aus der Datenbank 26 ausgelesen. Darüber hinaus dient die Bedieneinrichtung 27 einer Bedienung des Bediengeräts 2 durch einen Nutzer. Dabei kann es sich beispielsweise um einen berührungsempfindlichen Bildschirm handeln.

Die Steuereinrichtung 25 ist dabei mit sämtlichen übrigen Komponenten 21 - 24, 26 und 27 verbunden. Die Steuereinrichtung 25 dient dabei der Steuerung der übrigen Komponenten 21 - 24, 26 und 27.

Soll die in Fig. 1 dargestellte Funktion durchgeführt werden, so steuert die Steuereinrichtung 25 die Kameraeinheit 23, um ein Bewegtbild des Raums 4 aus Fig. 1 aufzunehmen. Das resultierende Bewegtbild wird von der Steuereinrichtung 25 an die Anzeigeeinrichtung 21 übertragen, welche das Bewegtbild darstellt. Gleichzeitig werden Positionsinformationen von der Positionserfassungseinrichtung 22 erfasst und an die Steuereinrichtung 25 übertragen. Die Anzeigeüberlagerungseinrichtung 24 nutzt nun diese Positionsinformationen, um eine perspektivisch korrekte Darstellung der Leuchte 3 aus Fig. 1 zu berechnen und über die Steuereinrichtung 25 an die Anzeigeeinrichtung 21 zu übertragen. Diese stellt die Leuchte 3 als visuelle Beleuchtungsinformation in dem Bewegtbild dar. Zusätzlich zu den Positionsinformationen der Positionserfassungseinrichtung 22 nutzt die Anzeigeüberlagerungseinrichtung 24 dabei weiterhin Umgebungsinformationen, welche den Raum 4 betreffen. Diese Umgebungsinformationen werden dabei z.B. aus der Datenbank 26 ausgelesen. Sie beinhalten dabei z.B. die Raumgeometrie des Raums 4. Die Umgebungsinformationen können dabei unter Zuhilfenahme des Bewegtbildes der Kameraeinheit 23 von der Steuereinrichtung 25 erstellt und in der Datenbank 26 gespeichert werden. Alternativ werden die Umgebungsinformationen vorab bestimmt und in der Datenbank 26 gespeichert. Mittels der Bedieneinrichtung 27 können von einem Nutzer verschiedene Leuchten oder andere Komponenten des Beleuchtungssystems als visuelle Beleuchtungsinformationen an unterschiedlichen Positionen des Raums 4 virtuell positioniert werden.

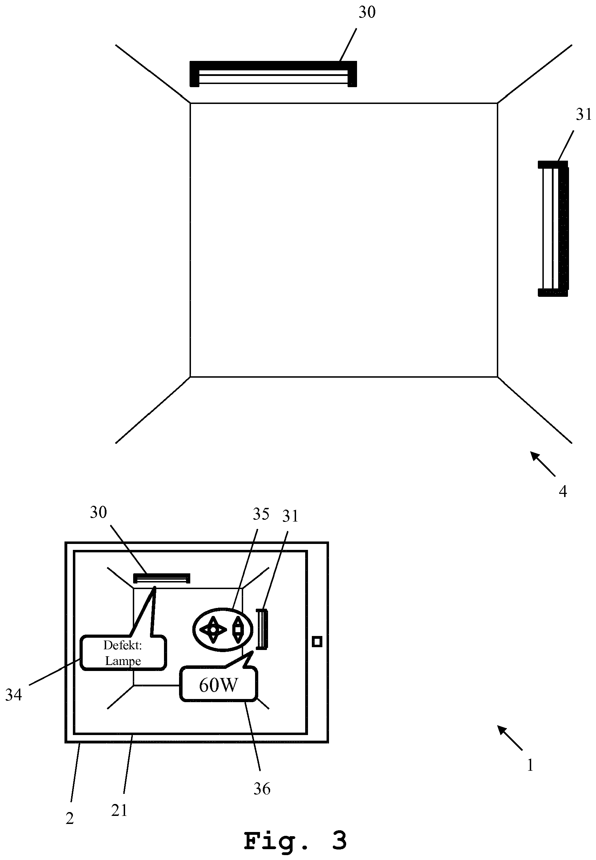

In Fig. 3 ist ein drittes Ausführungsbeispiel des erfindungsgemäßen Beleuchtungssystem 1 dargestellt. Das Beleuchtungssystem 1 beinhaltet hier nun das Bediengerät 2 und zwei Leuchten 30, 31. Das Bediengerät 2 erfasst auch hier erneut ein Bewegtbild des Raums 4 mit den Leuchten 30 und 31. Dabei erfasst das Bediengerät 2 die Leuchten 30, 31 nicht nur, sondern erkennt sie auch. Der Raum 4 und die Leuchten 30 und 31 werden auf der Anzeigeeinrichtung 21 des Bediengeräts dargestellt. Um dabei die von der Kameraeinheit erfassten Leuchten 30, 31 zu erkennen und den adressierbaren Leuchten des Beleuchtungssystems 1 zuzuordnen, kann dabei auf Positionsinformationen der Leuchten, welche beispielsweise bei einer Einrichtung des Beleuchtungssystems 1 zu den Leuchten abgespeichert wurden, zugegriffen werden. Anhand der Ausrichtung und Position des Bediengeräts 2 und der bekannten Positionsinformationen der Leuchten, kann jede von der Kameraeinheit erfasste Leuchte eindeutig einer Leuchte des Beleuchtungssystems 1 zugeordnet werden. Eine Steuerung einzelner Leuchten oder eine Gruppierung von Leuchten und gemeinsame Steuerung der Leuchtengruppen ist so denkbar.

Zusätzlich wird hier ein Bedienelement 35 als visuelle Beleuchtungsinformation in der Nähe der Leuchte 31 dargestellt. Mittels dieses Bedienelements 35 kann die Leuchte 31 gesteuert werden. Das Bedienelement 35 wird beispielsweise dann eingeblendet, wenn ein Nutzer die Leuchte 31 auf der Anzeigeeinrichtung 21 auswählt.

Über das Bedienelement 35 kann insbesondere eine Lichtverteilung, eine Farbtemperatur, ein Dimmverlauf, oder auch eine Lichtstimmung bzw. eine gesamte Beleuchtungssituation eingestellt und simuliert werden. Dabei können die Bedienungen von mehreren Leuchten eingestellt und der Effekt auf der Anzeigeeinrichtung 21 des Bediengeräts 2 dargestellt werden, bevor das Bediengerät 2 die entsprechenden Bedienungen an das Steuergerät eines Beleuchtungssystems 1 weiterleitet.

Darüber hinaus sind hier Zusatzinformationen 34, 36 zu den Leuchten 30, 31 als visuelle Beleuchtungsinformationen dargestellt. Zu der Leuchte 30 ist eine Zusatzinformation 34 dargestellt. Hier ist der Inhalt der Zusatzinformation, dass die Leuchte 30 einen Defekt aufweist, nämlich dass die Lampe der Leuchte 30 defekt ist. Ein solcher Defekt wird dem Bediengerät 2 entweder von einem hier nicht dargestellten Steuergerät des Beleuchtungssystems 1 übermittelt oder von dem Bediengerät 2 selbstständig erkannt. Das Erkennen des Defekts geschieht dabei entweder durch eine Ermittlung einer fehlerhaften Leuchtstärke, Farbtemperatur oder durch Ermitteln eines Flackerns der Leuchte oder durch ein gezieltes Aussenden eines Blinkmusters durch die Leuchte oder einer in die Leuchte integrierten Status-LED, welche von dem Bediengerät 2 erfasst werden. Sämtliche dieser Signale werden von der Kameraeinheit des Bediengeräts 2 erfasst.

Zusätzlich können zu Schulungszwecken Defekte auch simuliert werden. In diesem Fall wird z.B. einem Techniker ein Defekt einer tatsächlich funktionstüchtigen Leuchte angezeigt, um seine Fähigkeiten zur korrekten Reparatur zu schulen.

Hinsichtlich der Leuchte 31 ist hier als Zusatzinformation 36 der aktuelle Energieverbrauch von 60 Watt dargestellt. Wird mit dem Bedienelement 35 eine Änderung der Beleuchtung durch die Leuchte 31 angesteuert, so wird diese Bedienung entweder direkt durchgeführt, oder der Effekt der Bedienung wird zunächst lediglich virtuell als Simulation auf der Anzeigeeinrichtung 21 eingeblendet. D.h. die geänderte Beleuchtungssituation des Raums 4 wird simuliert und perspektivisch korrekt in das Bewegtbild eingefügt. Zusätzlich kann für die noch nicht umgesetzte sondern nur simulierte neue Beleuchtungssituation der voraussichtliche Energiebedarf als Zusatzinformation angezeigt werden. Als Zusatzinformationen können weiterhin Montagehinweise und/oder technische Daten und/oder Bedienungsinformationen angezeigt werden.

Darüber hinaus können Optimierungsmöglichkeiten hinsichtlich des Energiebedarfs als visuelle Beleuchtungsinformationen angezeigt werden. Beispielsweise könnte bei einer Leuchte, welche mit einer Glühlampe bestückt ist, automatisch angezeigt werden, wie viel Energie durch Ersatz der Glühbirne durch eine Energiesparlampe eingespart werden könnte.

Auch eine Erfassung einer noch nicht montierten Leuchte als Teil des Beleuchtungssystems 1 ist möglich. Insbesondere für noch nicht montierte Leuchten ist eine Anzeige von Montagehinweisen und/oder eventuell einzuhaltenden Abstandsgrößen zu Wänden oder anderen Leuchten oder Sanitärgegenständen relevant.

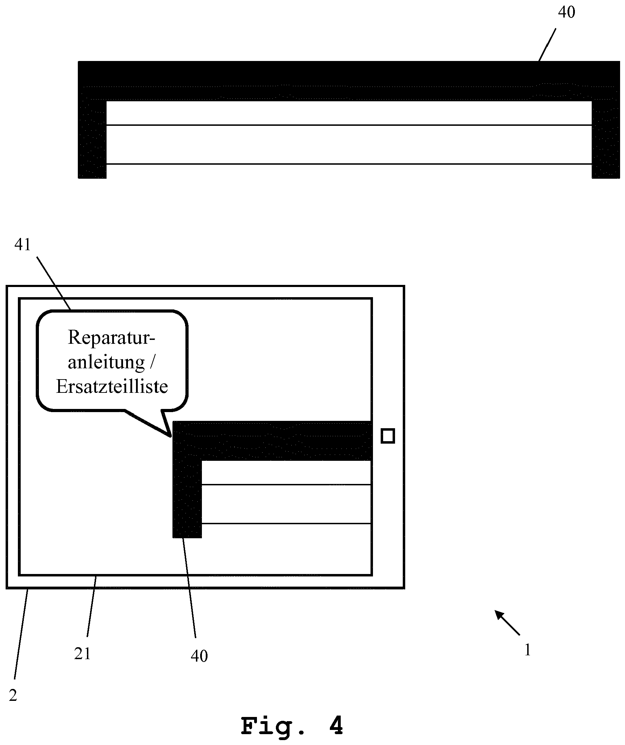

In Fig. 4 ist ein viertes Ausführungsbeispiel des erfindungsgemäßen Beleuchtungssystems 1 dargestellt. Hier ist eine Aufnahme einer Leuchte 40 durch das Bediengerät 2 gezeigt. Auch hier wird ein Bewegtbild der Leuchte in Echtzeit auf der Anzeigeeinrichtung 21 dargestellt. Der aufgenommene Teil der Leuchte ist hier ebenfalls von der Anzeigeeinrichtung 21 dargestellt. Auch hier sind Zusatzinformationen 41 als visuelle Beleuchtungsinformationen dargestellt. Beispielsweise ist hier für eine defekte Leuchte 40 eine Reparaturanleitung und/oder eine Ersatzteilliste 41 dargestellt. Die Leuchte 40 kann dabei eine montierte oder eine nicht montierte Leuchte des Beleuchtungssystems 1 sein.

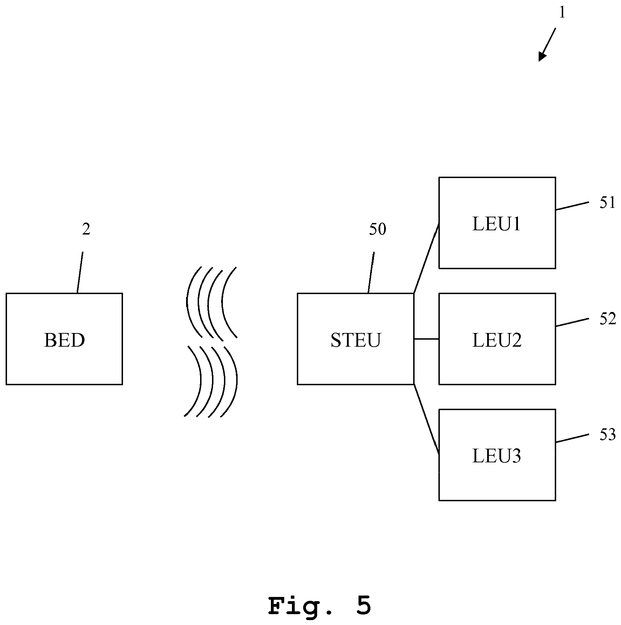

In Fig. 5 ist ein fünftes Ausführungsbeispiel des erfindungsgemäßen Beleuchtungssystems 1 in einem Blockschaltbild dargestellt. Das Beleuchtungssystem 1 beinhaltet hier ein Bediengerät 2, welches über eine drahtlose Schnittstelle mit einem Steuergerät 50 verbunden ist. Das Steuergerät 50 ist jeweils drahtgebunden mit Leuchten 51 - 53 verbunden. Das Steuergerät 50 steuert dabei die Leuchten 51 - 53. Mittels des Bediengeräts können Bedienungen der Leuchten 51 - 53, wie anhand von Fig. 3 dargestellt, durchgeführt werden. In diesem Fall wird bei Bedienung einer Leuchte 51 - 53 in das Bediengerät 2 eingegeben und über die drahtlose Schnittstelle an das Steuergerät 50 übertragen. Das Steuergerät 50 führt nun die Bedienung durch.

Soll zunächst eine Simulation des Effekts der gewünschten Bedienung am Bediengerät durchgeführt werden, so wird die Bedienung noch nicht an das Steuergerät 50 übertragen, nachdem die Bedienung ausgewählt wurde, sondern es wird zunächst die Simulation und Anzeige durchgeführt. Erst nach einer erneuten Bestätigung der Bedienung durch den Nutzer erfolgt eine Übertragung an das Steuergerät 50 und eine entsprechende Steuerung der Leuchten.

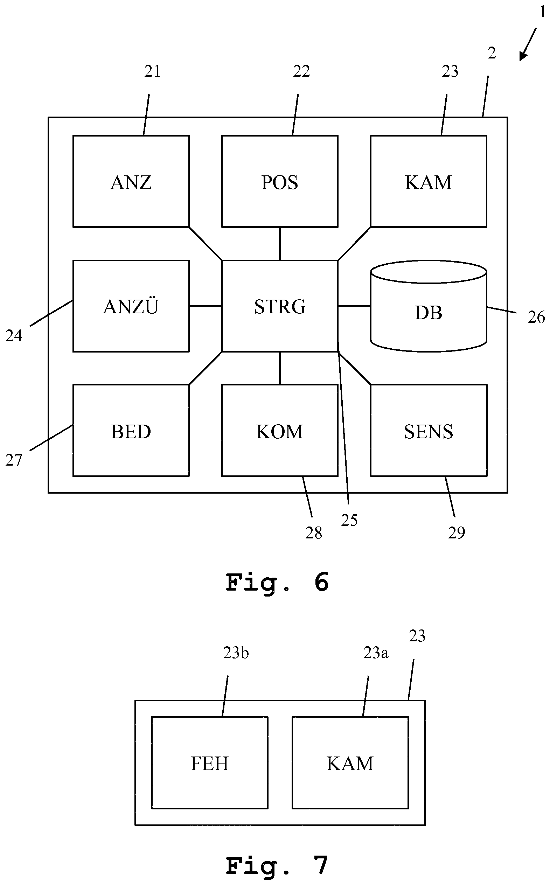

In Fig. 6 ist ein sechstes Ausführungsbeispiel des erfindungsgemäßen Beleuchtungssystems 1 dargestellt. Hier ist lediglich der innere Aufbau des Bediengeräts 2 gezeigt. Das Bediengerät 2, welches hier dargestellt ist, entspricht weitgehend dem Bediengerät 2 aus Fig. 2. Zusätzlich weist das Bediengerät 2 hier jedoch eine Kommunikationseinrichtung 28 und eine Sensoreinrichtung 29 auf. Dabei dient die Kommunikationseinrichtung 28 der Kommunikation des Bediengeräts 2 mit dem Steuergerät 50 aus Fig. 5, wie dies dort dargestellt ist. Die Kommunikation dient dabei der Steuerung der Leuchten des Beleuchtungssystems 1. Mittels der Sensoreinrichtung 29 ermittelt das Bediengerät 2 die Umgebungsinformationen in dem Raum 4, welche in der Datenbank 26 gespeichert werden. Alternativ oder zusätzlich ermittelt das Bediengerät 2 mit der Sensoreinrichtung 29 Defekte an Leuchten, welche nicht von der Kameraeinheit 23 ermittelt werden können. Insbesondere kann die Sensoreinheit 29 einen Farbtemperatursensor beinhalten.

In Fig. 7 ist ein siebtes Ausführungsbeispiel des erfindungsgemäßen Beleuchtungssystems 1 dargestellt. Hier ist jedoch lediglich der innere Aufbau der Kameraeinheit 23 aus Fig. 2 bzw. Fig. 6 dargestellt. Die Kameraeinheit 23 umfasst dabei eine Kamera 23a und eine Fehlerdetektionseinrichtung 23b. Die Fehlerdetektionseinrichtung 23b dient dabei der Ermittlung von Fehlern in Leuchten bzw. Komponenten von Leuchten. Die Kamera 23a dient dabei der Aufnahme des Bewegtbildes.

In Fig. 8 ist ein erstes Ausführungsbeispiels des erfindungsgemäßen Verfahrens in einem Flussdiagramm dargestellt. In einem ersten Schritt 100 wird ein Bewegtbild der Umgebung eines Bediengeräts erfasst. In einem zweiten Schritt 101 wird das Bewegtbild in Echtzeit angezeigt. In einem dritten Schritt 102 werden Positionsinformationen des Bediengeräts ermittelt. In einem abschließenden vierten Schritt 103 werden visuelle Beleuchtungsinformationen perspektivisch weitgehend korrekt in das Bewegtbild eingefügt. Dabei handelt es sich beispielsweise um eine virtuelle Leuchte.

In Fig. 9 ist ein zweites Ausführungsbeispiel des erfindungsgemäßen Verfahrens in einem Flussdiagramm dargestellt. In einem ersten Schritt 200 wird eine Leuchte in dem erfassten Bewegtbild erfasst und erkannt. In einem zweiten Schritt 201 werden Zusatzinformationen zu der erfassten Leuchte als visuelle Beleuchtungsinformationen mittels des Bediengeräts im Bereich der jeweiligen Leuchte dargestellt.

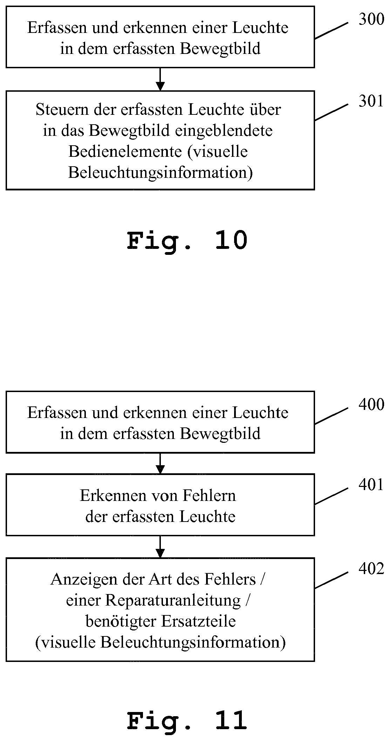

In Fig. 10 ist ein drittes Ausführungsbeispiel des erfindungsgemäßen Verfahrens in einem Flussdiagramm gezeigt. In einem ersten Schritt 300 wird eine Leuchte in dem erfassten Bewegtbild erfasst und erkannt. In einem zweiten Schritt 301 wird die erfasste Leuchte über als visuelle Beleuchtungsinformationen in das Bewegtbild eingeblendete Bedienelemente gesteuert. Optional können dabei Effekte der Bedienung als visuelle Beleuchtungsinformationen auf der Anzeigeeinrichtung des Bediengeräts simuliert dargestellt werden, bevor die tatsächlichen Leuchten gesteuert werden.

In Fig. 11 ist ein viertes Ausführungsbeispiel des erfindungsgemäßen Verfahrens in einem Flussdiagramm dargestellt. In einem ersten Schritt 400 wird in dem erfassten Bewegtbild eine Leuchte erfasst und erkannt. In einem zweiten Schritt 401 werden Fehler der erfassten Leuchte oder von Komponenten der erfassten Leuchte erfasst und erkannt. In einem dritten Schritt 402 werden in einem Bereich der Anzeigeeinrichtung, welche der defekten Leuchten bzw. defekten Komponente der Leuchte entspricht, Informationen hinsichtlich der Art des Fehlers und/oder eine Reparaturanleitung und/oder eine Liste benötigter Ersatzteile als visuelle Beleuchtungsinformationen angezeigt.

Die Erfindung ist dabei nicht auf das dargestellte Ausführungsbeispiel beschränkt. Wie bereits erwähnt, können unterschiedlichste Leuchten von der Anzeigeeinheit des Bediengeräts angezeigt und in ihrer Funktion simuliert werden. Auch eine Vielzahl gleicher oder unterschiedlicher Leuchten kann von dem Bediengerät gesteuert werden. Alle vorstehend beschriebenen Merkmale oder in den Figuren gezeigten Merkmale sind im Rahmen der Erfindung beliebig vorteilhaft miteinander kombinierbar. Als Bewegtbild wird im Rahmen der Erfindung das gemäß Augmented Reality erfasst Bild verstanden, welches auch als Standbild - übergreifend also als Bild im Allgemeinen - wiedergegeben werden kann.

## Patentansprüche

1. Beleuchtungssystem (1) mit zumindest einer tatsächlichen Leuchte (30, 31, 51, 52, 53), einem Steuergerät (50) zur Steuerung der tatsächlichen Leuchte (30, 31, 51, 52, 53) und mit einem Bediengerät (2), wobei das Steuergerät (50) mit dem Bediengerät (2) zur Übertragung einer Bedienung des Bediengerätes (2) verbunden ist, das Bediengerät (2) umfassend:
- eine Kameraeinheit (23), welche ausgebildet ist, um eine Umgebung (4) des Bediengeräts (2) mit der zumindest einen tatsächlichen Leuchte (30, 31, 51, 52, 53) als Bewegtbild zu erfassen, und welche ausgebildet ist, um die zumindest eine tatsächliche Leuchte (30, 31, 51, 52, 53) auf dem erfassten Bewegtbild zu erfassen und zu erkennen,
- eine Anzeigeeinrichtung (21), welche ausgebildet ist, um das Bewegtbild in Echtzeit anzuzeigen,
- eine Positionserfassungseinrichtung (22), welche ausgebildet ist, um Positionsinformationen des Bediengeräts (2) zu ermitteln, und
- eine Anzeigeüberlagerungseinrichtung (24), welche ausgebildet ist, um basierend auf Umgebungsinformationen und den Positionsinformationen visuelle Beleuchtungsinformationen perspektivisch weitgehend korrekt in das angezeigte Bewegtbild einzufügen und mittels der Anzeigeeinrichtung anzuzeigen,
wobei die Beleuchtungsinformationen zumindest ein Bedienelement (35) zur Bedienung und Steuerung der tatsächlichen Leuchte (30, 31, 51, 52, 53) sind.

2. Beleuchtungssystem (1) nach Anspruch 1,
wobei die Beleuchtungsinformationen ferner zumindest eine virtuelle Leuchte (3), eine Beleuchtungs- und/oder Abstrahlcharakteristik oder andere Effekte einer Beleuchtung und/oder eine Anzeige eines Energieverbrauchs (36) einer virtuellen Leuchte (3) oder einer der erfassten tatsächlichen Leuchte (30, 31, 51, 52, 53), Zusatzinformationen (34, 36, 41) einer virtuellen und/oder einer der tatsächlichen Leuchten (3, 30, 31, 51, 52, 53), ein weiteres Bedienelement (35) zur Bedienung und Steuerung zumindest einer virtuellen Leuchte (3), oder Informationen bezüglich einer defekten virtuellen und/oder tatsächlichen Leuchte (3, 30, 31, 51, 52, 53) sind, und
wobei bevorzugt das zumindest eine Bedienelement (35) ferner zur Bedienung und Steuerung einer virtuellen Leuchte (3) geeignet ist.

3. Beleuchtungssystem (1) nach Anspruch 1 oder 2,
wobei die Umgebungsinformationen eine Raumgeometrie eines Raumes (4), in welchem sich das Bediengerät (2) befindet, umfassen, und/oder
wobei die Anzeigeüberlagerungseinrichtung (24) ausgebildet ist, um die Umgebungsinformationen aus einer Datenbank (26) auszulesen oder zu empfangen oder anhand des Bewegtbildes und/oder anhand von Sensorinformationen einer Sensoreinrichtung (29) zu ermitteln.

4. Beleuchtungssystem (1) nach einem der Ansprüche 1 bis 3,
wobei die Anzeigeüberlagerungseinrichtung (24) ausgebildet ist, um eine Beleuchtung der Umgebung (4) des Bediengeräts (2), vorzugsweise durch die zumindest eine tatsächliche und/oder durch zumindest eine virtuelle Leuchte (3, 30, 31, 51, 52, 53), als Beleuchtungsinformation zu simulieren und perspektivisch weitgehend korrekt in das angezeigte Bewegtbild einzufügen, wobei als Beleuchtungsinformation eine Helligkeit und/oder Lichtfarbe und/oder Abstrahlcharakteristik der Beleuchtung einstellbar sind.

5. Beleuchtungssystem (1) nach einem der Ansprüche 1 bis 4,
wobei die Anzeigeüberlagerungseinrichtung (24) ausgebildet ist, um Zusatzinformationen (34, 36, 41) hinsichtlich der zumindest einen erfassten tatsächlichen Leuchte (30, 31, 51, 52, 53) und/oder hinsichtlich zumindest einer virtuellen Leuchte (3) als Beleuchtungsinformation in einem Bereich der tatsächlichen und/oder der virtuellen Leuchte (3, 30, 31, 51, 52, 53) in das Bewegtbild einzufügen, wobei die Zusatzinformationen (34, 36, 41) Montagehinweise und/oder technische Daten und/oder Bedienungsinformationen sind.

6. Beleuchtungssystem (1) nach einem der Ansprüche 1 bis 5,
wobei die Anzeigeüberlagerungseinrichtung (24) ausgebildet ist, um das zumindest eine Bedienelement (35), welches der zumindest einen tatsächlichen Leuchte (30, 31, 51, 52, 53) und vorzugsweise einer virtuellen Leuchte (3) zugeordnet ist, als Beleuchtungsinformation in einem Bereich der zumindest einen tatsächlichen Leuchte (3, 30, 31, 51, 52, 53) in das Bewegtbild einzufügen,
wobei das Bediengerät (2) ausgebildet ist, um eine Bedienung des angezeigten Bedienelements (35) zu erfassen und an das Steuergerät (50) zu übertragen, und
wobei das Steuergerät (50) ausgebildet ist, um die zumindest eine tatsächliche und vorzugsweise eine virtuelle Leuchte (3, 30, 31, 51, 52, 53) des Beleuchtungssystems (1) basierend auf der von dem Bediengerät (2) übertragenen Bedienung zu steuern, wobei die Bedienung ein Schalten und/oder ein Dimmen und/oder ein Verändern einer Farbtemperatur und/oder ein Verändern einer Beleuchtungsfarbe der tatsächlichen und/oder der virtuellen Leuchte (3, 30, 31, 51, 52, 53) umfasst,
wobei vorzugsweise die Anzeigeüberlagerungseinrichtung (24) ausgebildet ist, um nach Erfassung der Bedienung des angezeigten Bedienelements (35),
- Effekte der Bedienung als Beleuchtungsinformation auf eine gegenwärtige Beleuchtung bzw. virtuelle Leuchte (3) eines von dem Bewegtbild dargestellten Bereichs zu simulieren und perspektivisch weitgehend korrekt in das angezeigte Bewegtbild einzufügen, und/oder
- einen Energieverbrauch (36) der tatsächlichen und/oder einer virtuellen Leuchte (3, 30, 31, 51, 52, 53) nach Durchführung der Bedienung abzuschätzen und als Beleuchtungsinformation in einem Bereich der zumindest einen tatsächlichen oder der virtuellen Leuchte (3, 30, 31, 51, 52, 53) in das Bewegtbild einzufügen, und
wobei das Bediengerät (2) ausgebildet ist, um die Bedienung erst nach einer erneuten Bestätigung der Bedienung an das Steuergerät (50) zu übertragen.

7. Beleuchtungssystem (1) nach einem der Ansprüche 1 bis 6,
wobei die Kameraeinheit (23) eine Fehlerermittlungseinrichtung (23b) aufweist, welche ausgebildet ist, um anhand des Bewegtbildes Defekte in der zumindest einen tatsächlichen und/oder in einer virtuellen Leuchte (3, 30, 31, 51, 52, 53) des Beleuchtungssystems (1) und/oder Defekte in Komponenten der zumindest einen tatsächlichen und/oder einer virtuellen Leuchte (3, 30, 31, 51, 52, 53) des Beleuchtungssystems (1) zu erkennen, und wobei die Anzeigeüberlagerungseinrichtung (24) ausgebildet ist, um in einem Bereich der defekten tatsächlichen und/oder der virtuellen Leuchte (3, 30, 31, 51, 52, 53) und/oder der defekten Komponente der tatsächlichen und/oder der virtuellen Leuchte (3, 30, 31, 51, 52, 53) Informationen zu dem Defekt und/oder eine Liste für eine Reparatur des Defekts benötigter Ersatzteile und/oder eine Anleitung zur Durchführung einer Reparatur des Defekts (41) als Beleuchtungsinformation in das angezeigte Bewegtbild einzufügen,
wobei vorzugsweise die Fehlerermittlungseinrichtung (23b) ausgebildet ist, um die Defekte anhand von eingeschränkter Lichtstärke und/oder Flackern und/oder fehlerhafter Lichtfarbe der tatsächlichen und/oder der virtuellen Leuchte (3, 30, 31, 51, 52, 53) und/oder anhand von Blinkmustern der tatsächlichen und/oder der virtuellen Leuchte (3, 30, 31, 51, 52, 53) und/oder anhand von Blinkmustern von in die tatsächliche und/oder in die virtuelle Leuchte (3, 30, 31, 51, 52, 53) integrierten Status-LEDs zu erkennen.

8. Verfahren zur Interaktion mit einem Beleuchtungssystem (1), welches ein Bediengerät (2), zumindest eine tatsächliche Leuchte (30, 31, 51, 52, 53) und ein mit dem Bediengerät (2) zur Übertragung einer Bedienung des Bediengerätes (2) verbundenes Steuergerät (50) zur Steuerung der tatsächlichen Leuchte (30, 31, 51, 52, 53) umfasst, mit den folgenden Schritten:
- Erfassen einer Umgebung des Bediengeräts (2) mit der zumindest einen tatsächlichen Leuchte (30, 31, 51, 52, 53) als Bewegtbild,
- Anzeigen des Bewegtbildes in Echtzeit mittels des Bediengeräts (2),
- Ermitteln von Positionsinformationen des Bediengeräts (2), und
- Perspektivisch weitgehend korrektes Einfügen visueller Beleuchtungsinformationen in das angezeigte Bewegtbild basierend auf Umgebungsinformationen und den Positionsinformationen,
wobei die zumindest eine tatsächliche Leuchte (30, 31, 51, 52, 53) auf dem erfassten Bewegtbild erfasst und erkannt wird, und
wobei die Beleuchtungsinformationen zumindest ein Bedienelement (35) zur Bedienung und Steuerung der tatsächlichen Leuchte (30, 31, 51, 52, 53) sind.

9. Verfahren nach Anspruch 8,
wobei die Beleuchtungsinformationen zumindest eine virtuelle Leuchte (3), eine Beleuchtungs- und/oder Abstrahlcharakteristik oder andere Effekte einer Beleuchtung und/oder eine Anzeige eines Energieverbrauchs (36) einer virtuellen Leuchte (3) oder der erfassten tatsächlichen Leuchte (30, 31, 51, 52, 53), Zusatzinformationen (34, 36, 41) einer der virtuellen und/oder tatsächlichen Leuchte (3, 30, 31, 51, 52, 53), ein weiteres Bedienelement (35) zur Bedienung und Steuerung zumindest einer virtuellen Leuchte (3), oder Informationen bezüglich einer defekten virtuellen und/oder tatsächlichen Leuchte (3, 30, 31, 51, 52, 53) sind, und
wobei bevorzugt das zumindest eine Bedienelement (35) ferner zur Bedienung und Steuerung einer der virtuellen Leuchten (3) geeignet ist.

10. Verfahren nach Anspruch 8 oder 9,
wobei die Umgebungsinformationen eine Raumgeometrie eines Raumes (4), in welchem sich das Bediengerät (2) befindet, umfassen, und/oder
wobei die Umgebungsinformationen aus einer Datenbank (26) ausgelesen oder empfangen oder anhand des Bewegtbildes und/oder anhand von Sensorinformationen einer Sensoreinrichtung (29) ermittelt werden.

11. Verfahren nach einem der Ansprüche 8 bis 10,
wobei eine Beleuchtung der Umgebung (4) des Bediengeräts (2), vorzugsweise durch die zumindest eine tatsächliche und/oder durch eine virtuelle Leuchte (3, 30, 31, 51, 52, 53), als Beleuchtungsinformation simuliert und perspektivisch weitgehend korrekt in das angezeigte Bewegtbild eingefügt wird, wobei als Beleuchtungsinformation eine Helligkeit und/oder Lichtfarbe und/oder Abstrahlcharakteristik der Beleuchtung einstellbar sind.

12. Verfahren nach einem der Ansprüche 8 bis 11,
wobei Zusatzinformationen (34, 36, 41) als Beleuchtungsinformation hinsichtlich der zumindest einen erfassten tatsächlichen Leuchte (30, 31, 51, 52, 53) oder hinsichtlich einer virtuellen Leuchte (3) in einem Bereich der zumindest einen tatsächlichen oder der virtuellen Leuchte (3, 30, 31, 51, 52, 53) in das Bewegtbild eingefügt werden, wobei die Zusatzinformationen (34, 36, 41) Montagehinweise und/oder technische Daten und/oder Bedienungsinformationen sind.

13. Verfahren nach einem der Ansprüche 8 bis 12,
wobei das zumindest eine Bedienelement (35), das der zumindest einen tatsächlichen Leuchte (30, 31, 51, 52, 53) und vorzugsweise einer virtuellen Leuchte (3) zugeordnet ist, als Beleuchtungsinformation in einem Bereich der zumindest einen tatsächlichen Leuchte (30, 31, 51, 52, 53) in das Bewegtbild eingefügt wird,
wobei eine Bedienung des angezeigten Bedienelements (35) erfasst wird, und
wobei die zumindest eine tatsächliche und vorzugsweise eine virtuelle Leuchte (3, 30, 31, 51, 52, 53) des Beleuchtungssystems (1) basierend auf der von dem Bediengerät (2) erfassten Bedienung gesteuert wird, wobei die Bedienung ein Schalten und/oder ein Dimmen und/oder ein Verändern einer Farbtemperatur und/oder ein Verändern einer Beleuchtungsfarbe der tatsächlichen und/oder der virtuellen Leuchte (3, 30, 31, 51, 52, 53) umfasst,
wobei vorzugsweise nach Erfassung der Bedienung des angezeigten Bedienelements (35),
- Effekte der Bedienung als Beleuchtungsinformation auf eine gegenwärtige Beleuchtung bzw. virtuelle Leuchte (3) eines von dem Bewegtbild dargestellten Bereichs simuliert und perspektivisch weitgehend korrekt in das angezeigte Bewegtbild eingefügt werden, und/oder
- ein Energieverbrauch (36) der tatsächlichen und/oder einer virtuellen Leuchte (3, 30, 31, 51, 52, 53) nach Durchführung der Bedienung als Beleuchtungsinformation abgeschätzt und in einem Bereich der zumindest einen tatsächlichen oder der virtuellen Leuchte (3, 30, 31, 51, 52, 53) in das Bewegtbild eingefügt wird, und
wobei die zumindest eine tatsächliche und/oder eine virtuelle Leuchte (3, 30, 31, 51, 52, 53) erst nach einer erneuten Bestätigung der Bedienung gemäß der Bedienung gesteuert wird.

14. Verfahren nach einem der Ansprüche 8 bis 13,
wobei anhand des Bewegtbildes Defekte in der zumindest einen tatsächlichen und/oder einer virtuellen Leuchte (3, 30, 31, 51, 52, 53) des Beleuchtungssystems (1) und/oder Defekte in Komponenten der zumindest einen tatsächlichen und/oder einer virtuellen Leuchte (3, 30, 31, 51, 52, 53) des Beleuchtungssystems (1) erkannt werden, und
wobei in einem Bereich der defekten tatsächlichen und/oder der defekten virtuellen Leuchte (3, 30, 31, 51, 52, 53), und/oder der defekten Komponente der tatsächlichen und/oder der virtuellen Leuchte (3, 30, 31, 51, 52, 53) Informationen zu dem Defekt und/oder eine Liste für eine Reparatur des Defekts benötigter Ersatzteile und/oder eine Anleitung zur Durchführung einer Reparatur des Defekts (41) als Beleuchtungsinformation in das angezeigte Bewegtbild eingefügt werden,
wobei vorzugsweise die Defekte anhand von eingeschränkter Lichtstärke und/oder Flackern und/oder fehlerhafter Lichtfarbe der tatsächlichen und/oder der virtuellen Leuchte (3, 30, 31, 51, 52, 53) und/oder anhand von Blinkmustern der tatsächlichen und/oder der virtuellen Leuchte (3, 30, 31, 51, 52, 53) und/oder anhand von Blinkmustern von in die tatsächliche und/oder die virtuelle Leuchte (3, 30, 31, 51, 52, 53) integrierten Status-LEDs erkannt werden.

## Claims

1. A lighting system (1) with at least one actual luminaire (30, 31, 51, 52, 53), a control device (50) for controlling the actual luminaire (30, 31, 51, 52, 53) and with an operating device (2), wherein the control device (50) is connected to the operating device (2) for transmitting an operation of the operating device (2), the operating device (2) comprising:
- a camera unit (23), which is designed, in order to capture an environment (4) of the operating device (2) with the at least one actual luminaire (30, 31, 51, 52, 53) as a moving image, and which is designed, in order to capture and to detect the at least one actual luminaire (30, 31, 51, 52, 53) on the captured moving image,
- a display device (21), which is designed, in order to display the moving image in real time,
- a position detection device (22), which is designed, in order to acquire position information relative to the operating device (2), and
- a display overlay device (24), which is designed, in order, based on environment information and the position information, to insert visual lighting information into the displayed moving image in a largely correct manner in terms of perspective, and to display said information by means of the display device,
wherein the lighting information is at least one operating element (35) for the operation and control of the actual luminaire (30, 31, 51, 52, 53).

2. The lighting system (1) according to Claim 1,
wherein the lighting information furthermore is at least one virtual luminaire (3), a lighting- and/or radiation characteristic or other effects of a lighting and/or a display of an energy consumption (36) of a virtual luminaire (3) or of one of the captured actual luminaires (30, 31, 51, 52, 53), additional information (34, 36, 41) relative to a virtual and/or one of the actual luminaires (3, 30, 31, 51, 52, 53), a further operating element (35) for the operation and control at least of one virtual luminaire (3), or information with respect to a defective virtual and/or actual luminaire (3, 30, 31, 51, 52, 53), and
wherein, preferably, the at least one operating element (35) furthermore is suitable for the operation and control of a virtual luminaire (3).

3. The lighting system (1) according to Claim 1 or 2,
wherein the environment information comprises a spatial geometry of a space (4), in which the operating device (2) is located, and/or
wherein the display overlay device (24) is designed, in order to read out or to receive and/or to acquire the environment information from a data base (26) by means of sensor information of a sensor device (29).

4. The lighting system (1) according to any one of Claims 1 to 3,
wherein the display overlay device (24) is designed, in order to simulate a lighting of the environment (4) of the operating device (2), preferably by means of the at least one actual and/or by means of at least one virtual luminaire (3, 30, 31, 51, 52, 53), as lighting information and to insert said information into the displayed moving image in a largely correct manner in terms of perspective, wherein as lighting information a brightness and/or light color and/or radiation characteristic of the lighting can be adjusted.

5. The lighting system (1) according to any one of Claims 1 to 4,
wherein the display overlay device (24) is designed, in order to insert additional information (34, 36, 41) with regard to the at least one captured actual luminaire (30, 31, 51, 52, 53) and/or with regard to at least one virtual luminaire (3) as lighting information in an area of the actual and/or the virtual luminaire (3, 30, 31, 51, 52, 53) into the moving image, wherein the additional information (34, 36, 41) is assembly instructions and/or technical data and/or operating information.

6. The lighting system (1) according to any one of Claims 1 to 5,
wherein the display overlay device (24) is designed, in order to insert the at least one operating element (35), which is associated with the at least one actual luminaire (30, 31, 51, 52, 53) and preferably with one virtual luminaire (3), as lighting information in an area of the at least one actual luminaire (3, 30, 31, 51, 52, 53) into the moving image, wherein the operating device (2) is designed, in order to capture an operation of the displayed operating element (35) and to transmit it to the control device (50), and wherein the control device (50), in order to control the at least one actual and preferably one virtual luminaire (3, 30, 31, 51, 52, 53) of the lighting system (1) based on the operation transmitted by the operating device (2), wherein the operation comprises a switching and/or a dimming and/or a changing of a color temperature and/or a changing of a lighting color of the actual and/or the virtual luminaire (3, 30, 31, 51, 52, 53), wherein preferably the display overlay device (24) is designed, in order, after capturing the operation of the displayed operating element (35),
- to simulate effects of the operation as lighting information on a current lighting or virtual luminaire (3) of an area displayed by the moving image and to insert said effects in a largely correct manner in terms of perspective into the displayed moving image, and/or
- to estimate an energy consumption (36) of the actual and/or a virtual luminaire (3, 30, 31, 51, 52, 53) after carrying out the operation and to insert it as lighting information in an area of the at least one actual or the virtual luminaire (3, 30, 31, 51, 52, 53) into the moving image, and
wherein the operating device (2) is designed, in order to transmit the operation only after a renewed confirmation to the control device (50).

7. The lighting system (1) according to any one of Claims 1 to 6,
wherein the camera unit (23) has an error detection device (23b), which is designed, in order to detect defects in the at least one actual and/or in one virtual luminaire (3, 30, 31, 51, 52, 53) of the lighting system (1) and/or defects in components of the at least one actual and/or one virtual luminaire (3, 30, 31, 51, 52, 53) of the lighting system (1) by means of the moving image, and
wherein the display overlay device (24) is designed, in order to insert information about the defect and/or a list for a repair of the defect of needed replacement parts and/or an instruction for carrying out a repair of the defect (41) as lighting information into the displayed moving image in an area of the defective actual and/or the virtual luminaire (3, 30, 31, 51, 52, 53) and/or of the defective components of the actual and/or the virtual luminaire (3, 30, 31, 51, 52, 53),
wherein preferably the error detection device (23b) is designed, in order to detect the defects by means of reduced light intensity and/or flickering and/or defective light color of the actual and/or the virtual luminaire (3, 30, 31, 51, 52, 53) and/or by means of flashing patterns of the actual and/or the virtual luminaire (3, 30, 31, 51, 52, 53) and/or by means of flashing patterns of status LEDs integrated into the actual and/or into the virtual luminaire (3, 30, 31, 51, 52, 53).

8. A method for the interaction with a lighting system (1), which comprises an operating device (2), at least one actual luminaire (30, 31, 51, 52, 53) and a control device (50) for controlling the actual luminaire (30, 31, 51, 52, 53), which control device is connected to the operating device (2) for transmitting an operation of the operating device (2), having the following steps:
- Capture of an environment of the operating device (2) with the at least one actual luminaire (30, 31, 51, 52, 53) as a moving image,
- display of the moving image in real time by means of the operating device (2),
- acquisition of position information relative to the operating device (2), and
- insertion of visual lighting information into the displayed moving image in a largely correct manner in terms of perspective, based on environment information and the position information,
wherein the at least one actual luminaire (30, 31, 51, 52, 53) on the captured moving image is captured and detected, and
wherein the lighting information is at least one operating element (35) for the operation and control of the actual luminaire (30, 31, 51, 52, 53).

9. The method according to Claim 8,
wherein the lighting information is at least one virtual luminaire (3), a lighting- and/or radiation characteristic or other effects of a lighting and/or a display of an energy consumption (36) of a virtual luminaire (3) or of the captured actual luminaire (30, 31, 51, 52, 53), additional information (34, 36, 41) of one of the virtual and/or actual luminaires (3, 30, 31, 51, 52, 53), a further operating element (35) for the operation and control at least of one virtual luminaire (3), or information with respect to a defective virtual and/or actual luminaire (3, 30, 31, 51, 52, 53), and
wherein preferably the at least one operating element (35) is furthermore suitable for the operation and control of one of the virtual luminaires (3).

10. The method according to Claim 8 or 9,
wherein the environment information comprises a spatial geometry of a space (4), in which the operating device (2) is located, and/or
wherein the environment information is read out or received or acquired from a data base (26) by means of the moving image and/or by means of sensor information of a sensor device (29).

11. The method according to any one of Claims 8 to 10,
wherein a lighting of the environment (4) of the operating device (2), preferably by means of the at least one actual and/or by means of a virtual luminaire (3, 30, 31, 51, 52, 53), is simulated as lighting information and is inserted into the displayed moving image in a largely correct manner in terms of perspective, wherein as lighting information a brightness and/or light color and/or radiation characteristic of the lighting can be adjusted.

12. The method according to any one of Claims 8 to 11,
wherein additional information (34, 36, 41) is inserted into the moving image as lighting information with regard to the at least one captured actual luminaire (30, 31, 51, 52, 53) or with regard to a virtual luminaire (3) in an area of the at least one actual and the virtual luminaire (3, 30, 31, 51, 52, 53), wherein the additional information (34, 36, 41) is assembly instructions and/or technical data and/or operating information.

13. The method according to any one of Claims 8 to 12,
wherein the at least one operating element (35), which is associated with the at least one actual luminaire (30, 31, 51, 52, 53) and preferably with a virtual luminaire (3), is inserted into the moving image as lighting information in an area of the at least one actual luminaire (30, 31, 51, 52, 53),
wherein an operation of the displayed operating element (35) is captured, and
wherein the at least one actual and preferably one virtual luminaire (3, 30, 31, 51, 52, 53) of the lighting system (1) is controlled based on the operation captured by the operating device (2), wherein the operation comprises a switching and/or a dimming and/or a changing of a color temperature and/or a changing of a lighting color of the actual and/or the virtual luminaire (3, 30, 31, 51, 52, 53),
wherein preferably after capturing the operation of the displayed operating element (35),
- effects of the operation as lighting information on a current lighting or virtual luminaire (3) of an area displayed by the moving image are simulated and said effects are inserted in a largely correct manner in terms of perspective into the displayed moving image, and/or
- an energy consumption (36) of the actual and/or a virtual luminaire (3, 30, 31, 51, 52, 53) after carrying out the operation is estimated as lighting information and is inserted in an area of the at least one actual or the virtual luminaire (3, 30, 31, 51, 52, 53) into the moving image, and
wherein the at least one actual and/or one virtual luminaire (3, 30, 31, 51, 52, 53) is controlled only after a renewed confirmation of the operation according to the operation.

14. The method according to any one of Claims 8 to 13,
wherein defects in the at least one actual and/or one virtual luminaire (3, 30, 31, 51, 52, 53) of the lighting system (1) and/or defects in components of the at least one actual and/or one virtual luminaire (3, 30, 31, 51, 52, 53) of the lighting system (1) are detected by means of the moving image, and
wherein in an area of the defective actual and/or the defective virtual luminaire (3, 30, 31, 51, 52, 53), and/or the defective components of the actual and/or the virtual luminaire (3, 30, 31, 51, 52, 53) information about the defect and/or a list for a repair of the defect of needed replacement parts and/or an instruction for carrying out a repair of the defect (41) is inserted as lighting information into the displayed moving image,
wherein preferably the defects are detected by means of reduced light intensity and/or flickering and/or defective light color of the actual and/or the virtual luminaire (3, 30, 31, 51, 52, 53) and/or by means of flashing patterns of the actual and/or the virtual luminaire (3, 30, 31, 51, 52, 53) and/or by means of flashing patterns of status LEDs integrated into the actual and/or into the virtual luminaire (3, 30, 31, 51, 52, 53).

## Revendications

1. Système d'éclairage (1) avec au moins un luminaire réel (30, 31, 51, 52, 53), un appareil de contrôle (50) pour le contrôle du luminaire réel (30, 31, 51, 52, 53) et avec un appareil de commande (2), l'appareil de contrôle (50) étant relié avec l'appareil de commande (2) pour la transmission d'une commande de l'appareil de commande (2), l'appareil de commande (2) comprenant :
- une unité de caméra (23) qui est conçue pour capturer un environnement (4) de l'appareil de commande (2) avec l'au moins un luminaire réel (30, 31, 51, 52, 53) en tant qu'image en mouvement et qui est conçue pour détecter et reconnaître l'au moins un luminaire réel (30, 31, 51, 52, 53) sur l'image en mouvement capturée,
- un dispositif d'affichage (21) qui est conçu pour afficher l'image en mouvement en temps réel,
- un dispositif de relevé de position (22) qui est conçu pou déterminer des informations de position de l'appareil de commande (2) et
- un dispositif de superposition d'affichage (24), qui est conçu pour insérer, sur la base d'informations d'environnement et des informations de position, des informations d'éclairage visuelles avec une perspective globalement correcte dans l'image en mouvement affichée et pour les afficher au moyen du dispositif d'affichage,
dans lequel les informations d'éclairage sont au moins un élément de commande (35) pour la commande et le contrôle du luminaire réel (30, 31, 51, 52, 53).

2. Système d'éclairage (1) selon la revendication 1,
dans lequel les informations d'éclairage sont en outre au moins un luminaire virtuel (3), une caractéristique d'éclairage et/ou d'émission ou d'autres effets d'un éclairage et/ou un affichage d'une consommation d'énergie (36) d'un luminaire virtuel (3) ou d'un des luminaires réels (30, 31, 51, 52, 53) détectés, des informations supplémentaires (34, 36, 41) d'un luminaire virtuel et/ou d'un des luminaires réels (3, 30, 31, 51, 52, 53), un autre élément de commande (35) pour la commande et le contrôle d'au moins un luminaire virtuel (3) ou des informations concernant un luminaire virtuel et/ou un luminaire réel (3, 30, 31, 51, 52, 53) défectueux et
dans lequel l'au moins un élément de commande (35) est en outre conçu pour la commande et le contrôle d'un luminaire virtuel (3).

3. Système d'éclairage (1) selon la revendication 1 ou 2,
dans lequel les informations d'environnement comprennent une géométrie spatiale d'une pièce (4) dans laquelle se trouve l'appareil de commande (2) et/ou
dans lequel le dispositif de superposition d'affichage (24) est conçu pour lire ou pour recevoir les informations d'environnement à partir d'une base de données (26) ou de les déterminer à l'aide de l'image en mouvement et/ou à l'aide d'informations de capteur d'un dispositif de capteur (29).

4. Système d'éclairage (1) selon l'une des revendications 1 à 3,
dans lequel le dispositif de superposition d'affichage (24) est conçu pour simuler un éclairage de l'environnement (4) de l'appareil de commande (2), de préférence à l'aide de l'au moins un luminaire réel et/ou à l'aide d'au moins un luminaire virtuel (3, 30, 31, 51, 52, 53), en tant qu'information d'éclairage et pour l'insérer avec une perspective globalement correcte dans l'image en mouvement affichée, dans lequel, en tant qu'information d'éclairage, une luminosité et/ou une couleur de lumière et/ou une caractéristique d'émission de l'éclairage peuvent être réglées.

5. Système d'éclairage (1) selon l'une des revendications 1 à 4,
dans lequel le dispositif de superposition d'affichage (24) est conçu pour insérer des informations supplémentaires (34, 36, 41) en ce qui concerne l'au moins un luminaire réel (30, 31, 51, 52, 53) détecté et/ou en ce qui concerne au moins un luminaire virtuel (3) en tant qu'information d'éclairage dans une zone du luminaire réel et/ou du luminaire virtuel (3, 30, 31, 51, 52, 53) dans l'image en mouvement, dans lequel les informations supplémentaires (34, 36, 41) sont des consignes de montage et/ou des données techniques et/ou des informations de commande.

6. Système d'éclairage (1) selon l'une des revendications 1 à 5,
dans lequel le dispositif de superposition d'affichage (24) est conçu pour insérer l'au moins un élément de commande (35), qui correspond à l'au moins un luminaire réel (30, 31, 51, 52, 53) et de préférence à un luminaire virtuel (3), en tant qu'information d'éclairage dans une zone de l'au moins un luminaire réel (3, 30, 31, 51, 52, 53) dans l'image en mouvement,
dans lequel l'appareil de commande (2) est conçu pour détecter une commande de l'élément de commande (35) affiché et de la transmettre à l'appareil de contrôle (50) et
dans lequel l'appareil de contrôle (50) est conçu pour contrôler l'au moins un luminaire réel et de préférence un luminaire virtuel (3, 30, 31, 51, 52, 53) du système d'éclairage (1) sur la base de la commande transmise par l'appareil de commande (2), dans lequel la commande comprend une commutation et/ou une gradation et/ou une modification d'une température de couleur et/ou une modification d'une couleur d'éclairage du luminaire réel et/ou virtuel (3, 30, 31, 51, 52, 53),
dans lequel, de préférence, le dispositif de superposition d'affichage (24) est conçu après la détection de la commande de l'élément de commande (35) affiché :
- pour simuler des effets de la commande en tant qu'information d'éclairage sur un éclairage réel resp. un luminaire virtuel (3) d'une zone représentée par l'image en mouvement et pour l'insérer avec une perspective globalement correcte dans l'image en mouvement affichée et/ou
- pour évaluer une consommation d'énergie (36) du luminaire réel et/ou d'un luminaire virtuel (3, 30, 31, 51, 52, 53) après l'exécution de la commande et pour l'insérer en tant qu'information d'éclairage dans une zone de l'au moins un luminaire réel ou du luminaire virtuel (3, 30, 31, 51, 52, 53) dans l'image en mouvement et dans lequel l'appareil de commande (2) est conçu pour transmettre la commande à l'appareil de contrôle (50) seulement après une nouvelle confirmation de la commande.

7. Système d'éclairage (1) selon l'une des revendications 1 à 6,
dans lequel l'unité de caméra (23) comprend un dispositif de détermination d'erreurs (23b) qui est conçu pour reconnaître, à l'aide de l'image en mouvement, des défauts dans l'au moins un luminaire réel et/ou dans un luminaire virtuel (3, 30, 31, 51, 52, 53) du système d'éclairage (1) et/ou des défauts dans des composants de l'au moins un luminaire réel et/ou d'un luminaire virtuel (3, 30, 31, 51, 52, 53) du système d'éclairage (1) et
dans lequel le dispositif de superposition d'affichage (24) est conçu pour insérer, dans une zone du luminaire réel et/ou du luminaire virtuel (3, 30, 31, 51, 52, 53) défectueux et/ou du composant défectueux du luminaire réel et/ou du luminaire virtuel (3, 30, 31, 51, 52, 53), des informations concernant le défaut et/ou une liste des pièces de rechange nécessaires pour une réparation du défaut et/ou des instructions pour la réalisation d'une réparation du défaut (41) en tant qu'information d'éclairage dans l'image en mouvement affichée,
dans lequel, de préférence, le dispositif de détermination d'erreurs (23b) est conçu pour reconnaître les défauts à l'aide d'une intensité lumineuse limitée et/ou un scintillement et/ou une couleur de lumière erronée du luminaire réel et/ou du luminaire virtuel (3, 30, 31, 51, 52, 53) et/ou à l'aide de modèles de clignotement de LED d'état intégrées dans le luminaire réel et/ou dans le luminaire virtuel (3, 30, 31, 51, 52, 53).

8. Procédé d'interaction avec un système d'éclairage (1), qui comprend un appareil de commande (2), au moins un luminaire réel (30, 31, 51, 52, 53) et un appareil de contrôle (50), relié avec l'appareil de commande (2) pour la transmission d'une commande de l'appareil de commande (2), pour le contrôle du luminaire réel (30, 31, 51, 52, 53), avec les étapes suivantes :
- capture d'un environnement de l'appareil de commande (2) avec l'au moins un luminaire réel (30, 31, 51, 52,5 3) en tant qu'image en mouvement,
- affichage de l'image en mouvement en temps réel au moyen de l'appareil de commande (2),
- détermination d'informations de position de l'appareil de commande (2) et
- insertion avec une perspective globalement correcte d'informations d'éclairage visuelles dans l'image en mouvement affichée sur la base d'informations d'environnement et des informations de position,
dans lequel l'au moins un luminaire réel (30, 31, 51, 52, 53) est détecté et reconnu sur l'image en mouvement capturée et
dans lequel les informations d'éclairage sont au moins un élément de commande (35) pour la commande et le contrôle du luminaire réel (30, 31, 51, 52, 53).

9. Procédé selon la revendication 8,
dans lequel les informations d'éclairage sont au moins un luminaire virtuel (3), une caractéristique d'éclairage et/ou d'émission ou d'autres effets d'un éclairage et/ou un affichage d'une consommation d'énergie (36) d'un luminaire virtuel (3) ou des luminaires réels (30, 31, 51, 52, 53) détectés, des informations supplémentaires (34, 36, 41) d'un luminaire virtuel et/ou d'un des luminaires réels (3, 30, 31, 51, 52, 53), un autre élément de commande (35) pour la commande et le contrôle d'au moins un luminaire virtuel (3) ou des informations concernant un luminaire virtuel et/ou un luminaire réel (3, 30, 31, 51, 52, 53) défectueux et
dans lequel, de préférence, l'au moins un élément de commande (35) est en outre conçu pour la commande et le contrôle d'un des luminaires virtuels (3).

10. Procédé selon la revendication 8 ou 9,
dans lequel les informations d'environnement comprennent une géométrie spatiale d'une pièce (4) dans laquelle se trouve l'appareil de commande (2) et/ou
dans lequel le dispositif de superposition d'affichage est conçu pour lire ou pour recevoir les informations d'environnement à partir d'une base de données (26) ou de les déterminer à l'aide de l'image en mouvement et/ou à l'aide d'informations de capteur d'un dispositif de capteur (29).

11. Procédé selon l'une des revendications 8 à 10,
dans lequel un éclairage de l'environnement (4) de l'appareil de commande (2) est simulé, de préférence, à l'aide de l'au moins un luminaire réel et/ou à l'aide d'au moins un luminaire virtuel (3, 30, 31, 51, 52, 53), en tant qu'information d'éclairage et inséré avec une perspective globalement correcte dans l'image en mouvement affichée, dans lequel, en tant qu'information d'éclairage, une luminosité et/ou une couleur de lumière et/ou une caractéristique d'émission de l'éclairage peuvent être réglées.

12. Procédé selon l'une des revendications 8 à 11,
dans lequel des informations supplémentaires (34, 36, 41) en ce qui concerne l'au moins un luminaire réel (30, 31, 51, 52, 53) détecté et/ou en ce qui concerne au moins un luminaire virtuel (3) sont insérées, en tant qu'information d'éclairage, dans une zone de l'au moins un luminaire réel et/ou du luminaire virtuel (3, 30, 31, 51, 52, 53) dans l'image en mouvement, dans lequel les informations supplémentaires (34, 36, 41) sont des consignes de montage et/ou des données techniques et/ou des informations de commande.

13. Procédé selon l'une des revendications 8 à 12,
dans lequel l'au moins un élément de commande (35), qui correspond à l'au moins un luminaire réel (30, 31, 51, 52, 53) et de préférence à un luminaire virtuel (3), est inséré, en tant qu'information d'éclairage dans une zone de l'au moins un luminaire réel (3, 30, 31, 51, 52, 53) dans l'image en mouvement,
dans lequel une commande de l'élément de commande (35) affiché est détectée et
dans lequel l'au moins un luminaire réel et de préférence un luminaire virtuel (3, 30, 31, 51, 52, 53) du système d'éclairage (1) est contrôlé sur la base de la commande transmise par l'appareil de commande (2), dans lequel la commande comprend une commutation et/ou une gradation et/ou une modification d'une température de couleur et/ou une modification d'une couleur d'éclairage du luminaire réel et/ou virtuel (3, 30, 31, 51, 52, 53),
dans lequel, de préférence, après la détection de la commande de l'élément de commande (35) affiché :
- des effets de la commande sont simulés en tant qu'information d'éclairage sur un éclairage réel resp. un luminaire virtuel (3) d'une zone représentée par l'image en mouvement et insérés avec une perspective globalement correcte dans l'image en mouvement affichée et/ou
- une consommation d'énergie (36) du luminaire réel et/ou d'un luminaire virtuel (3, 30, 31, 51, 52,5 3) après l'exécution de la commande est évaluée et insérée en tant qu'information d'éclairage dans une zone de l'au moins un luminaire réel ou du luminaire virtuel (3, 30, 31, 51, 52, 53) dans l'image en mouvement et l'au moins un luminaire réel et/ou un luminaire virtuel (3, 30, 31, 51, 52, 53) est contrôlé e,n fonction de la commande seulement après une nouvelle confirmation de la commande.

14. Procédé selon l'une des revendications 8 à 13,
dans lequel, à l'aide de l'image en mouvement, des défauts dans l'au moins un luminaire réel et/ou dans un luminaire virtuel (3, 30, 31, 51, 52, 53) du système d'éclairage (1) et/ou des défauts dans des composants de l'au moins un luminaire réel et/ou d'un luminaire virtuel (3, 30, 31, 51, 52, 53) du système d'éclairage (1) sont reconnus et
dans lequel, dans une zone du luminaire réel et/ou du luminaire virtuel (3, 30, 31, 51, 52, 53) défectueux et/ou du composant défectueux du luminaire réel et/ou du luminaire virtuel (3, 30, 31, 51, 52, 53), des informations concernant le défaut et/ou une liste des pièces de rechange nécessaires pour une réparation du défaut et/ou des instructions pour la réalisation d'une réparation du défaut (41) sont insérées en tant qu'information d'éclairage dans l'image en mouvement affichée,
dans lequel, de préférence, les défauts sont reconnus à l'aide d'une intensité lumineuse limitée et/ou d'un scintillement et/ou d'une couleur de lumière erronée du luminaire réel et/ou du luminaire virtuel (3, 30, 31, 51, 52, 53) et/ou à l'aide de modèles de clignotement de LED d'état intégrées dans le luminaire réel et/ou dans le luminaire virtuel (3, 30, 31, 51, 52, 53).
